# EUROPEAN PATENT SPECIFICATION

(11) **EP 3 686 448 B1**
(45) Date of publication and mention of the grant of the patent: **08.06.2022**
(21) Application number: 18859186.1
(22) Date of filing: 20.08.2018
(51) Int. Cl.: F16C 11/06, F16J 3/04, F16J 15/52

(54) **BALL JOINT**
KUGELGELENK
JOINT À ROTULE

(30) Priority: 19.09.2017 JP 2017179043
(43) Date of publication of application: 29.07.2020
(73) Proprietor: NOK Corporation, Tokyo 105-8585 (JP)
(72) Inventor: HIROTA, Takuma, Makinohara-shi Shizuoka 421-0532 (JP)
(74) Representative: TBK
(86) International application number: PCT/JP2018/030625
(87) International publication number: WO 2019/058830

(56) References cited:
- EP-A2- 2 657 552
- WO-A1-2011/049012
- JP-A- H11 108 044
- JP-A- H11 223 209
- JP-U- S54 134 871
- US-A- 2 271 293
- US-A1- 2003 156 896
- US-A1- 2012 148 336

## Description

### [Technical Field]

The present disclosure relates to a ball joint that includes a dust cover.

### [Background Art]

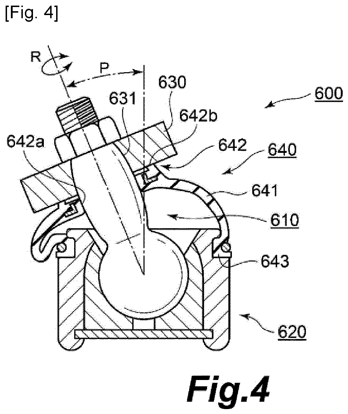

Ball joints provided in various devices such as a vehicle conventionally include dust covers in order to prevent water and dust from entering a joint portion and prevent grease from flowing out of the joint portion. A ball joint according to Conventional Example 1 will be described with reference to Fig. 4. Fig. 4 is a schematic cross-sectional view of the ball joint according to Conventional Example 1.

A ball joint 600 according to Conventional Example 1 includes a ball stud 610 that has a spherical portion at one end of a shaft portion, a socket 620 that supports the ball stud 610 allowing it to freely rotate and swing, and a knuckle 630 that is coupled to the shaft portion of the ball stud 610. A dust cover 640 includes a seal body made of an elastic body that is integrally provided with a deformable membranous body portion 641, a fixed portion 643 that is provided on one end side of the body portion 641 and is fixed to the socket 620, and a seal portion 642 that is provided on the other end side of the body portion 641. The seal portion 642 includes an inner peripheral seal portion 642a that is configured to slide on the shaft portion of the ball stud 610, and a dust seal portion 642b that is configured to slide on the knuckle 630.

According to the ball joint 600, in the case where the ball stud 610 rotates in a direction illustrated by an arrow R in the drawing relative to the socket 620, the seal portion 642 slides relative to the shaft portion of the ball stud 610 and the knuckle 630, and sealing performance is thereby maintained. In the case where the ball stud 610 swings in a direction illustrated by an arrow P in the drawing relative to the socket 620, the body portion 641 of the dust cover 640 deforms, and sealing performance is thereby maintained.

The ball joint 600 according to Conventional Example 1 has an outer peripheral surface of the shaft portion of the ball stud 610 which includes a substantially tapered curved surface, and an inner peripheral surface of a shaft hole 631 of the knuckle 630 also includes a substantially tapered curved surface. This enables the knuckle 630 to be positioned accurately relative to the shaft portion when the shaft portion of the ball stud 610 is inserted into the shaft hole 631 of the knuckle 630, and the outer peripheral surface of the shaft portion and the inner peripheral surface of the shaft hole 631 are brought into close contact over the entire periphery. Thus, an annular gap between the shaft portion and the shaft hole 631 is sealed, and it is possible to prevent entry of foreign matter from the outside through the annular gap. This enables the dust seal portion 642b provided in the seal portion 642 to effectively function and prevents entry of foreign matter into the area on the inner peripheral seal portion 642a side.

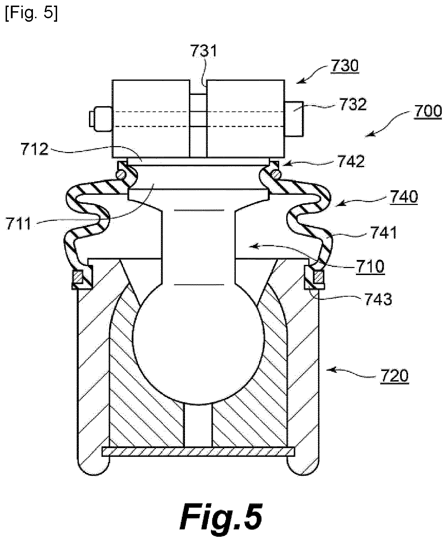

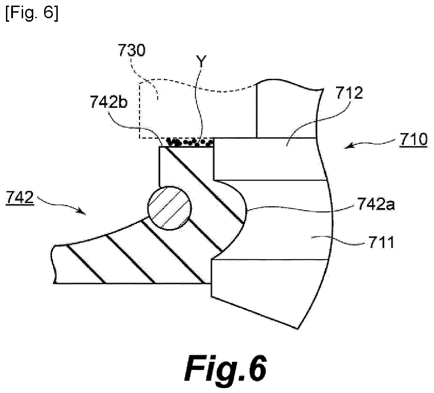

Another type of ball joint is known which has a pinch bolt for coupling a shaft portion of a ball stud and a knuckle (coupling member). Such ball joint will be described with reference to Figs. 5 and 6. Fig. 5 is a schematic cross-sectional view of a ball joint according to Conventional Example 2. Fig. 6 is a partially enlarged cross-sectional view of the ball joint according to Conventional Example 2.

A ball joint 700 according to Conventional Example 2 includes a ball stud 710 that has a spherical portion at one end of a shaft portion, a socket 720 that supports the ball stud 710 allowing it to freely rotate and swing, and a knuckle 730 that is coupled to the shaft portion of the ball stud 710. A dust cover 740 is made of an elastic body and integrally includes a deformable membranous body portion 741, a fixed portion 743 that is provided on one end side of the body portion 741 and is fixed to the socket 720, and a seal portion 742 that is provided on the other end side of the body portion 741.

The knuckle 730 according to Conventional Example 2 is provided with a shaft hole into which the shaft portion of the ball stud 710 is inserted, and a gap 731 extending from the shaft hole to an outer wall surface of the knuckle 730 is formed in the knuckle 730. The shaft portion and the knuckle 730 are coupled by a pinch bolt 732 that pinches and fixes two surface areas in the outer wall surface of the knuckle 730 sandwiching the gap 731 with the shaft portion inserted into the shaft hole.

The gap 731 provided in the knuckle 730 of the ball joint 700 according to Conventional Example 2 allows entry of foreign matter therethrough. Since providing the seal portion 742 with a dust lip as in Conventional Example 1 which is configured to slide on to the knuckle 730 may not solve the problem, the shaft portion of the ball stud 710 of the Conventional Example 2 is provided with an annular concave portion 711 with which an inner peripheral surface 742a of the seal portion 742 is in close contact and on which the inner peripheral surface 742a is allowed to slide, and an annular convex portion 712 that prevents entry of the foreign matter from the gap 731 and is disposed above the annular concave portion 711. The annular convex portion 712 prevents entry of the foreign matter into a sliding part between the annular concave portion 711 of the shaft portion and the seal portion 742 even when the foreign matter has entered through the gap 731.

However, a foreign matter Y as illustrated in Fig. 6 like mud or rust powder accumulates in a gap between a top surface 742b of the seal portion 742 and the knuckle 730 over time even if the annular convex portion 712 is provided. This accelerates wear of the seal portion 742, and the foreign matter Y enters the sliding part between the annular concave portion 711 and the seal portion 742, thereby causing reduced sealing performance. Thus, the technique for maintaining the sealing performance over a long period is desired.

Other known techniques for coping with the foreign matter entering from the gap in the knuckle (coupling member) of a ball joint with a pinch bolt suffer from an increased number of components or complicated structure. Thus, there is still room for improvement.

### [Citation List]

### [Patent Literature]

[PTL 1]
Japanese Utility Model Application Publication No. S58-130118

[PTL 2]
Japanese Patent Application Publication No. H11-108044 [Summary of Invention]

### [Technical Problem]

An object of the present disclosure is to provide a ball joint having a coupling member provided with a gap, of which sealing performance can be stably maintained over a long period.

### [Solution to Problem]

In order to achieve the above object, the present disclosure has adopted the following means.

Specifically, the present disclosure provides a ball joint including:
a ball stud having a shaft portion and a spherical portion at one end on a lower side in a vertical direction of the shaft portion;
a socket having a bearing for the spherical portion, the socket supporting the ball stud allowing it to freely rotate and swing;
a coupling member coupled to the shaft portion on the other end side of the shaft portion; and
a dust cover made of an elastic body which integrally includes a deformable body portion, a fixed portion provided on one end side of the body portion and fixed to the socket, and a seal portion provided on the other end side of the body portion configured to slide on the shaft portion, wherein
the coupling member includes a shaft hole into which the shaft portion is inserted and a gap that extends from the shaft hole to an outer wall surface of the coupling member,
the shaft portion and the coupling member are coupled by a fixing device that pinches and fixes two surface areas in the outer wall surface of the coupling member sandwiching the gap with the shaft portion inserted into the shaft hole,
the shaft portion of the ball stud includes an annular concave portion and an annular convex portion that is disposed at a position above the annular concave portion and below a coupling part between the shaft portion and the coupling member,
an inner peripheral surface side of the seal portion of the dust cover is in close contact with and configured to freely slide on both an outer peripheral surface of the annular concave portion and an outer peripheral surface of the annular convex portion, and an outer peripheral surface side of the seal portion is provided with a clamping member that clamps the seal portion to the shaft portion, and
a top surface of the seal portion facing the coupling member has an inclined surface radially reduced toward the coupling member.

According to the present disclosure, the top surface of the seal portion having the inclined surface radially reduced toward the coupling member makes it easy for a foreign matter which enters through the gap provided in the coupling member and falls onto the top surface of the seal portion to slip down the inclined surface, and hence it is possible to prevent the foreign matter from accumulating on the top surface of the seal portion. This prevents the foreign matter from entering the inner peripheral surface side of the seal portion.

### [Advantageous Effects of Invention]

As described thus far, according to the present disclosure, it is possible to stably maintain sealing performance of the ball joint having the coupling member provided with the gap over a long period.

### [Brief Description of Drawings]

[Fig. 1]

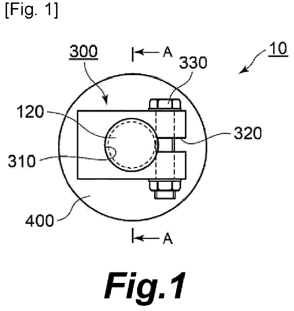

   Fig. 1 is a plan view of a ball joint according to an embodiment.
[Fig. 2]

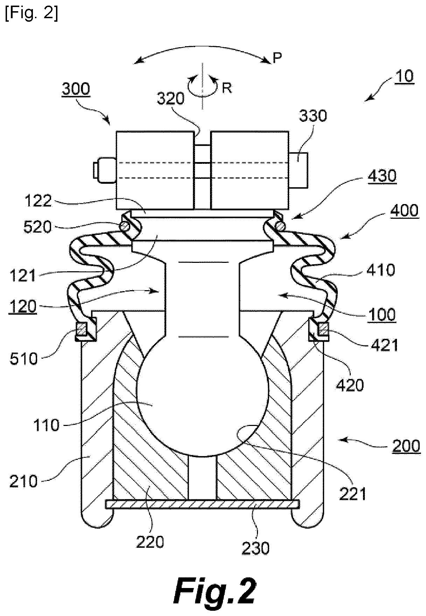

   Fig. 2 is a schematic cross-sectional view of the ball joint according to the embodiment.
[Fig. 3]

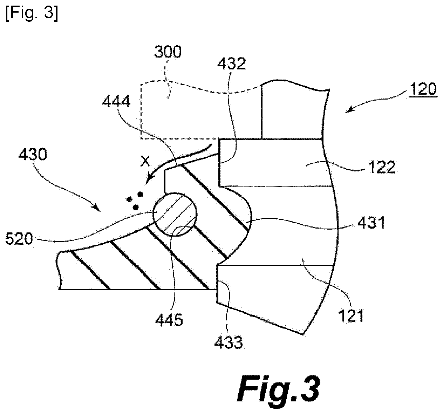

   Fig. 3 is a partially enlarged cross-sectional view of the ball joint according to the embodiment.
[Fig. 4]
   Fig. 4 is a schematic cross-sectional view of a ball joint according to Conventional Example 1.
[Fig. 5]
   Fig. 5 is a schematic cross-sectional view of a ball joint according to Conventional Example 2.
[Fig. 6]
   Fig. 6 is a partially enlarged cross-sectional view of the ball joint according to Conventional Example 2.

### [Description of Embodiments]

Hereinbelow, with reference to the drawings, a mode for carrying out the disclosure will be described in detail based on an embodiment illustratively. It should be noted that, however, unless otherwise described specifically, the dimensions, materials, shapes, and relative arrangements of components described in the embodiment are not intended to limit the scope of the disclosure.

### (Embodiment)

A ball joint according to an embodiment will be described with reference to Figs. 1 to 3. Fig. 1 is a plan view of the ball joint. Fig. 2 is a schematic cross-sectional view of the ball joint along the line A-A illustrated in Fig. 1. Fig. 2 shows external views for a ball stud and a coupling member (knuckle) and cross-sectional views for the other members. Fig. 3 is a partially enlarged cross-sectional view of the ball joint in the vicinity of a seal portion of a dust cover. Fig. 3 shows an external view for the ball stud with a position of the coupling member illustrated by a dotted line.

### <Ball Joint>

The ball joint according to the present embodiment will be described mainly with reference to Figs. 1 and 2. A ball joint 10 includes a ball stud 100, a socket 200 that supports the ball stud 100 allowing it to freely rotate and swing, and a knuckle 300 serving as a coupling member that is coupled to a shaft portion 120 of the ball stud 100. The ball joint 10 is used in a state where the knuckle 300 is disposed above the socket 200 in a vertical direction. A downward direction in Fig. 2 is a vertically downward direction and an upward direction in Fig. 2 is a vertically upward direction. In addition, in the following description, "one end side" corresponds to a lower side in the vertical direction, and "the other end side" corresponds to an upper side in the vertical direction.

The ball stud 100 has a spherical portion 110 at one end on the lower side of the shaft portion 120 in the vertical direction. An annular concave portion 121 is formed in the shaft portion 120. An annular convex portion 122 is formed in the shaft portion 120 at a position above the annular concave portion 121 and below a coupling part between the shaft portion 120 and the knuckle 300. The annular convex portion 122 is positioned adjacent to the annular concave portion 121, and is formed above the annular concave portion 121 as illustrated in Fig. 3.

The socket 200 includes an annular case 210, a bottom plate 230 that is fixed to the case 210 on its bottom side, and a bearing 220 for the spherical portion 110 of the ball stud 100. The bearing 220 has a bearing surface 221 having a spherical surface with the same radius of curvature as that of the spherical portion 110.

The knuckle 300 is coupled to the shaft portion 120 on the other end side of the shaft portion 120. The knuckle 300 includes a shaft hole 310 into which the shaft portion 120 is inserted and a gap 320 that extends from the shaft hole 310 to an outer wall surface of the knuckle 300. The shaft portion 120 and the knuckle 300 are coupled by a pinch bolt 330 (fixing device) that pinches and fixes two surface areas in the outer wall surface of the knuckle 300 sandwiching the gap 320 with the shaft portion 120 inserted into the shaft hole 310 of the knuckle 300.

A dust cover 400 is provided in order to prevent water and dust from entering a joint portion and prevent grease from flowing out of the joint portion.

### <Dust Cover>

The dust cover 400 will be described with reference to Figs. 2 and 3. The dust cover 400 is made of an elastic body such as rubber (e.g., chloroprene rubber). The dust cover 400 integrally includes a deformable, annular, and membranous body portion 410, a fixed portion 420 that is provided on one end side of the body portion 410 and is fixed to the socket 200, and a seal portion 430 that is provided on the other end side of the body portion 410. The body portion 410 has a bellows-like part.

The fixed portion 420 has an annular groove 421. A clamping member 510 is clamped to the annular groove 421, and the fixed portion 420 is thereby fixed to the case 210 of the socket 200. The clamping member 510 can be a spring, a band, or a circlip.

An inner peripheral surface side of the seal portion 430 is configured to be slidably in close contact with both of outer peripheral surfaces of the annular concave portion 121 and the annular convex portion 122 that are formed in the shaft portion 120 of the ball stud 100. In other words, an annular convex portion 431 that protrudes to an inner side in a radial direction is provided on the inner peripheral surface side of the seal portion 430. The annular convex portion 431 is configured to be slidably in close contact with the outer peripheral surface of the annular concave portion 121 of the shaft portion 120. In addition, in the inner peripheral surface of the seal portion 430, a cylindrical surface 432 above the annular convex portion 431 is configured to be slidably in close contact with the outer peripheral surface of the annular convex portion 122. Further, in the inner peripheral surface of the seal portion 430, a cylindrical surface 433 below the annular convex portion 431 is also configured to be slidably in close contact with the outer peripheral surface of the shaft portion 120. Thus, in the seal portion 430, the entire inner peripheral surface of the seal portion 430 is configured to be slidably in close contact with the outer peripheral surface of the shaft portion 120.

In addition, a clamping member 520 that clamps the seal portion 430 to the shaft portion 120 is provided on an outer peripheral surface side of the seal portion 430. More specifically, an annular groove 445 is provided on the outer peripheral surface side of the seal portion 430. The clamping member 520 is tightened around the annular groove 445, and this keeps the inner peripheral surface of the seal portion 430 in close contact with the outer peripheral surface of the shaft portion 120. As the clamping member 520, it is possible to use various well-known techniques such as a spring, a band, and a circlip. Thus, in the ball joint 10 , two portions of the dust cover 100, the fixed portion 420 and the seal portion 430 are both tightened with the clamping members 510 and 520, and are thereby mounted to the socket 200 and the ball stud 100 respectively. Accordingly, the dust cover 100 has an excellent mountability. In addition, it is possible to bring the fixed portion 420 and the seal portion 430 into close contact with the socket 200 and the ball stud 100 respectively more reliably than in the case where reinforcement rings or the like are provided inside the fixed portion 420 and the seal portion 430 in the dust cover 100 made of the elastic body.

In the seal portion 430, a top surface 444 facing the knuckle 300 is constituted by an inclined surface generated by the seal portion tapering down in diameter toward the knuckle 300. Note that, in the present embodiment, the top surface 444 is constituted by a tapered surface. However, the top surface 444 can also be constituted by an inclined surface of which cross-section has a curved line, other than the tapered surface. In the ball joint 10, the fixed portion 420 and the seal portion 430 of the dust cover 100 are configured to be brought into close contact with the socket 200 and the ball stud 100 respectively with large force. Consequently, the fixed portion 420 and the seal portion 430 hardly move relative to the socket 200 and the ball stud 100 in the axial direction of the shaft portion 120. In addition, in the present embodiment, the gap 320 is provided in the knuckle 300, and hence it is necessary to prevent the gap 320 catching any part of the seal portion 430 and damaging the seal portion 430. Accordingly, taking dimensional tolerances of the individual members into consideration, a gap has to be provided between the top surface 444 of the seal portion 430 and the knuckle 300.

In the thus configured dust cover 400, when the ball stud 100 swings relative to the socket 200 (swings in a direction of an arrow P in Fig. 2), the body portion 410 deforms. In addition, when the ball stud 100 rotates relative to the socket 200 (rotates in a direction of an arrow R in Fig. 2), the seal portion 430 slides relative to the shaft portion 120 of the ball stud 100. With the configuration described above, even when the ball stud 100 swings or rotates relative to the socket 200, the dust cover 400 provides sealing capability.

### <Advantages of Ball Joint According to Present Embodiment

In the ball joint 10, the top surface 444 of the seal portion 430 of the dust cover 400 is constituted by the inclined surface generated by the seal portion tapering down in diameter toward the knuckle 300. Consequently, even when a foreign matter (mud or rust powder) enters through the gap 320 provided in the knuckle 300 and falls onto the top surface 444 of the seal portion 430, the foreign matter easily slides down the inclined surface (see an arrow X in Fig. 3). Accordingly, it is possible to prevent the foreign matter from accumulating on the top surface 444 of the seal portion 430. With this, it is possible to effectively prevent the foreign matter from entering the inner peripheral surface side of the seal portion 430.

As described thus far, according to the ball joint 10, even when the knuckle 300 includes the gap 320, it is possible to stably maintain sealing performance over a long period.

### [Reference Signs List]

- 10: Ball joint
- 100: Ball stud
- 110: Spherical portion
- 120: Shaft portion
- 121: Annular concave portion
- 122: Annular convex portion
- 200: Socket
- 210: Case
- 220: Bearing
- 221: Bearing surface
- 230: Bottom plate
- 300: Knuckle
- 310: Shaft hole
- 320: Gap
- 330: Pinch bolt
- 400: Dust cover
- 410: Body portion
- 420: Fixed portion
- 421: Annular groove
- 430: Seal portion
- 431: Annular convex portion
- 432: Cylindrical surface
- 433: Cylindrical surface
- 444: Top surface
- 445: Annular groove
- 510: Clamping member
- 520: Clamping member

## Claims

1. A ball joint (10) comprising:
a ball stud (100) having a spherical portion (110) at one end on a lower side in a vertical direction of a shaft portion (120) of the ball stud;
a socket (200) having a bearing (220) for the spherical portion, the socket supporting the ball stud allowing it to freely rotate and swing;
a coupling member (300) coupled to the shaft portion on the other end side of the shaft portion; and
a dust cover (400) integrally including a deformable body portion (410), a fixed portion (420) provided on one end side of the body portion and fixed to the socket, and a seal portion (430) provided on the other end side of the body portion so as to slide on the shaft portion, the dust cover being made of an elastic body, wherein
the coupling member includes a shaft hole (310) into which the shaft portion is inserted and a gap (320) that extends from the shaft hole to an outer wall surface of the coupling member,
the shaft portion and the coupling member are coupled by a fixing device (330) that pinches and fixes two surface areas sandwiching a part provided with the gap in the outer wall surface of the coupling member in a state in which the shaft portion is inserted into the shaft hole,
the shaft portion of the ball stud includes an annular concave portion (121) and an annular convex portion (122) that is disposed at a position above the annular concave portion and below a coupling part between the shaft portion and the coupling member,
an inner peripheral surface side of the seal portion of the dust cover is configured to be slidably in close contact with both of an outer peripheral surface of the annular concave portion and an outer peripheral surface of the annular convex portion, and an outer peripheral surface side of the seal portion is provided with a clamping member (510) that clamps the seal portion to the shaft portion, and
a top surface (444) of the seal portion facing the coupling member is constituted by an inclined surface generated by the seal portion tapering down in diameter toward the coupling member.

## Patentansprüche

1. Kugelgelenk (10) mit:
einem Kugelzapfen (100), der einen kugelförmigen Abschnitt (110) an einem Ende an einer unteren Seite in einer vertikalen Richtung eines Wellenabschnitts (120) des Kugelzapfens hat;
einer Muffe (200), die eine Lagerung (220) für den kugelförmigen Abschnitt hat, wobei die Muffe, die den Kugelzapfen stützt, es ihm erlaubt, frei zu rotieren und zu schwenken;
einem Koppelbauteil (300), das an den Wellenabschnitt an der anderen Endseite des Wellenabschnitts gekoppelt ist; und
einer Staubabdeckung (400), die integral einen deformierbaren Körperabschnitt (410), einen befestigten Abschnitt (420), der an einer Endseite des Körperabschnitts vorgesehen ist und an der Muffe befestigt ist, und einen Dichtabschnitt (430) aufweist, der an der anderen Endseite des Körperabschnitts vorgesehen ist, um an dem Wellenabschnitt zu gleiten, wobei die Staubabdeckung aus einem elastischen Körper hergestellt ist, wobei
das Koppelbauteil ein Wellenloch (310), in das der Wellenabschnitt eingesetzt ist, und einen Spalt (320) beinhaltet, der sich von dem Wellenloch zu einer Außenwandfläche des Koppelbauteils erstreckt,
der Wellenabschnitt und das Koppelbauteil mittels einer Befestigungsvorrichtung (330) gekoppelt sind, die zwei Flächenbereiche einklemmt und fixiert, die einen Teil zwischen sich legen, der mit dem Spalt in der Außenwandfläche des Koppelbauteils in einem Zustand versehen ist, in dem der Wellenabschnitt in das Wellenloch eingesetzt ist,
der Wellenabschnitt des Kugelzapfens einen ringförmigen konkaven Abschnitt (121) und einen ringförmigen konvexen Abschnitt (122) beinhaltet, der an einer Position über dem ringförmigen konkaven Abschnitt und unter einem Koppelbauteil zwischen dem Wellenabschnitt und dem Koppelbauteil angeordnet ist,
eine Innenumfangsflächenseite des Dichtabschnitts der Staubabdeckung so gestaltet ist, dass sie gleitfähig in engem Kontakt mit sowohl einer Außenumfangsfläche des ringförmigen konkaven Abschnitts als auch einer Außenumfangsfläche des ringförmigen konvexen Abschnitts ist, und eine Außenumfangsflächenseite des Dichtabschnitts mit einem Klemmbestandteil (510) versehen ist, der den Dichtabschnitt an den Wellenabschnitt klemmt, und
eine obere Fläche (444) des Dichtabschnitts, der dem Koppelbauteil gegenüberliegt, durch eine geneigte Fläche gebildet ist, die mittels des Dichtabschnitts erzeugt wird, der sich zu dem Koppelbauteil hin in seinem Durchmesser verjüngt.

## Revendications

1. Joint à rotule (10) comprenant :
un pivot à rotule (100) ayant une partie sphérique (110) au niveau d'une extrémité sur un côté inférieur dans une direction verticale d'une partie d'arbre (120) du pivot à rotule ;
un logement (200) ayant un palier (220) pour la partie sphérique, le logement supportant le pivot à rotule, lui permettant de tourner et d'osciller librement ;
un élément de couplage (300) couplé à la partie d'arbre sur l'autre côté d'extrémité de la partie d'arbre ; et
un couvercle anti-poussière (400) comprenant, de manière solidaire, une partie de corps déformable (410), une partie fixe (420) prévue sur un côté d'extrémité de la partie de corps et fixée au logement, et une partie de joint d'étanchéité (430) prévue sur l'autre côté d'extrémité afin de coulisser sur la partie d'arbre, le couvercle anti-poussière étant réalisé avec un corps élastique, dans lequel :
l'élément de couplage comprend un trou d'arbre (310) dans lequel la partie d'arbre est insérée et un espace (320) qui s'étend du trou d'arbre à une surface de paroi externe de l'élément de couplage,
la partie d'arbre et l'élément de couplage sont couplés par un dispositif de fixation (330) qui pince et fixe deux surfaces prenant en sandwich une partie prévue avec l'espace dans la surface de paroi externe de l'élément de couplage dans un état dans lequel la partie d'arbre est insérée dans le trou d'arbre,
la partie d'arbre du pivot à rotule comprend une partie concave annulaire (121) et une partie convexe annulaire (122) qui est disposée dans une position au-dessus de la partie concave annulaire et sous une partie de couplage entre la partie d'arbre et l'élément de couplage,
un côté de surface périphérique interne de la partie de joint d'étanchéité du couvercle anti-poussière est configuré pour être en contact immédiat, par coulissement, à la fois avec une surface périphérique externe de la partie concave annulaire et une surface périphérique externe de la partie convexe annulaire, et un côté de surface périphérique externe de la partie de joint d'étanchéité est prévu avec un élément de serrage (510) qui serre la partie de joint d'étanchéité sur la partie d'arbre, et
une surface supérieure (444) de la partie de joint d'étanchéité faisant face à l'élément de couplage est constituée par une surface inclinée générée par la partie de joint d'étanchéité se rétrécissant progressivement vers le bas du point de vue du diamètre vers l'élément de couplage.
